Europäisches Patentamt

European Patent Office

Office européen des brevets

(11) Veröffentlichungsnummer: **0 097 812**
**A1**

## (12) EUROPÄISCHE PATENTANMELDUNG

(21) Anmeldenummer: **83105093.5**

(22) Anmeldetag: **24.05.83**

(51) Int. Cl.³: **A 01 N 37/46**

(30) Priorität: **03.06.82 DE 3220884**

(43) Veröffentlichungstag der Anmeldung:
**11.01.84 Patentblatt 84/2**

(84) Benannte Vertragsstaaten:
**AT BE CH DE FR GB IT LI LU NL SE**

(71) Anmelder: **BAYER AG**
**Zentralbereich Patente, Marken und Lizenzen**
**D-5090 Leverkusen 1, Bayerwerk(DE)**

(72) Erfinder: **Charlet, Egbert, Dr.**
**Oelbergweg 13**
**D-5064 Roesrath(DE)**

(72) Erfinder: **Finkel, Peter**
**Isidor-Caro-Strasse 56**
**D-5000 Koeln 80(DE)**

(72) Erfinder: **Strickmann, Heribert**
**Galileistrasse 5**
**D-5000 Koeln 80(DE)**

(54) Insektenvertreibungsmittel.

(57) Insektenvertreibungsmittel auf der Basis von 3-(N-n-Butyl-N-acetyl)-amino-propionsäureethylester (BAAPE) in alkoholischer Lösung erhalten durch Zusatz von Ricinusöl eine verlängerte Wirksamkeit.

EP 0 097 812 A1

Croydon Printing Company Ltd.

0097812

BAYER AKTIENGESELLSCHAFT          5090 Leverkusen, Bayerwerk

Zentralbereich
Patente, Marken und Lizenzen   Si/ABc


Insektenvertreibungsmittel


Die vorliegende Erfindung betrifft Insektenvertreibungsmittel zur Anwendung auf der menschlichen Haut auf der
Basis von 3-(N-n-Butyl-acetyl)-aminopropionsäureethyl-
ester (BAAPE) mit verlängerter Wirksamkeit.

BAAPE wurde als Insektenrepellent in der Deutschen Patentschrift 2 246 433 vom 27.3.75, sowie von Klier, M., Kuhlow, F; J.Soc.Cosm.Chem. 27, 141-153 (1976) beschrieben.

Die Substanz gilt als gering toxisch, gut hautverträglich und zeichnet sich insbesondere als wirksames Insektenrepellent zur Anwendung auf der menschlichen Haut aus.

Die Prüfung der Wirksamkeitsdauer von Repellent-Formulierungen gegen Mücken erfolgt üblicherweise in vivo an der
Gelbfiebermücke (Aedes aegypti). /Lust, S.; Parf. u. Kosm.,
41, 304 (1960)7. Hierzu werden jeweils 500 weibliche
Mücken in einen mit Gaze bespannten Käfig von 35 x 35 x
35 cm gegeben. Die Stechbereitschaft der Mücken wird
durch Einbringen eines Armes der jeweiligen Testperson
überprüft. Als Kriterium einer positiven Stechbereitschaft gilt das Anfliegen, Stechen und Saugen einer größeren Anzahl Mücken.


Le A 21 730-Ausland

Die Prüfung der Repellentien findet im Labor bei einer Temperatur von 22°C und einer relativen Luftfeuchtigkeit von 70 $\pm$ 10 % statt. Die Applikation der Testsubstanzen erfolgt unmittelbar vor Versuchsbeginn. Die Menge von 0,1 $\pm$ 0,01 ml Repellentsubstanz wird mit einem Glasstab möglichst gleichmäßig auf einer Fläche von 100 cm² auf dem Unterarm des Probanden aufgebracht. Danach wird die behandelte Fläche an den Rändern umklebt. Die restliche Armfläche wird mit einem Plastikhandschuh, der bis zu den Achseln reicht, bedeckt.

Dadurch kann eine Beeinträchtigung der Mücken durch Hautausscheidungen, die auf die Mücken attraktiv wirken, ausgeschlossen werden.

Der auf diese Weise behandelte Arm wird in den Mückenkäfig eingebracht, wobei der Kontakt der offenen Armfläche mit der Gaze verhindert wird, um eine Kontamination der Gaze und den gleichzeitigen Verlust von Repellentsubstanz von der Armfläche zu vermeiden. Das Einbringen des Armes erfolgt direkt nach der Applikation in stündlichem Abstand. Die Expositionszeit beträgt jeweils 5 Minuten. Das Ende der Wirkungsdauer einer Substanz wird angenommen, wenn sich während dieser Zeitspanne mindestens 2 Mücken auf der behandelten Fläche vollgesogen haben.

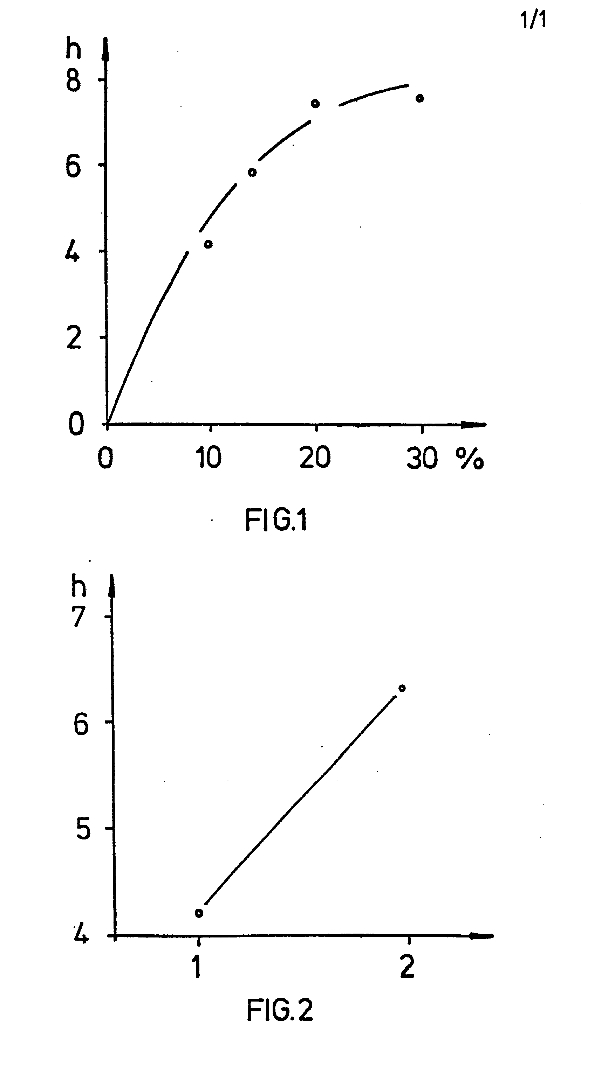

Fig. 1 zeigt die nach oben beschriebener Methodik ermittelte Abhängigkeit der Wirksamkeitsdauer von der BAAPE-Konzentration. Auf der Abszisse wurde hierzu die Konzentration des BAAPE in % und auf der Ordinate die Wirksamkeitsdauer in Stunden aufgetragen.

Le A 21 730

0097812

- 3 -

Für eine wünschenswerte Wirksamkeitsdauer 6 bis 8 Stunden sind Konzentrationen von ca. 20 % erforderlich.

Es ist bekannt, daß den alkoholischen Lösungen von BAAPE auch andere Stoffe wie Parfümöle, Wasser, Lösungsvermittler und Fette zugesetzt werden. Diese Zusätze dienen zur Verbesserung von Duft, Konsistenz, Verteilbarkeit und Hautgefühl.

Außerdem sind Kombinationen mit anderen Repellentwirkstoffen /Charlet, E., Finkel, P., Strickmann, H.; Parf. u. Kosm. 59, 367 (1978)7 bekannt.

Es wurden nun Stoffe gesucht, welche die Wirksamkeitsdauer erhöhen. Überraschenderweise konnte gefunden werden, daß durch Zusatz von Ricinusöl eine verbesserte Wirksamkeitsdauer erreicht wurde. Ricinusöl besitzt selbst keine Repellent-Wirkung.

Fig. 2 zeigt einen Vergleich der Wirksamkeitsdauer von 10 %igen BAAPE-Formulierungen ohne (1) und mit Zusatz von 15 % Ricinusöl (2).

Auf der Abszisse sind die beiden Formulierungen, auf der Ordinate die Wirksamkeitsdauer in Stunden aufgetragen. Die Wirksamkeitsdauer von 10 % BAAPE in Isopropanol wird durch Zusatz von 15 % Ricinusöl von 4,2 Stunden auf 6,4 Stunden erhöht. Die Formulierung mit Zusatz von Ricinusöl übertrifft damit sogar die Wirksamkeitsdauer einer 15 %igen BAAPE-Lösung ohne Zusatz.

Le A 21 730

Durch die erfindungsgemäßen Formulierungen wurden eine verlängerte Wirksamkeit beziehungsweise bei gleicher Wirksamkeit eine geringere Einsatzkonzentration des BAAPE erreicht.

Die Konzentration von BAAPE bei den erfindungsgemäßen Formulierungen liegt zwischen 3 und 40 %, vorzugsweise jedoch zwischen 5 und 25 %. Ganz besonders bevorzugt sind Konzentrationen zwischen 10 und 20 %.

Unter Berücksichtigung der kosmetischen Erfordernisse sollte die Konzentration von Ricinusöl zwischen 5 und 35 %, vorzugsweise jedoch zwischen 10 und 20 % liegen.

Man verwendet handelsübliches Ricinusöl DAB VII. Als Lösungsmittel eignen sich ein- und mehrwertige Alkohole wie z.B. Ethanol, Isopropanol, Propylenglykol oder Glycerin. Weitere Zusätze können sein: andere Repellentien /Charlet, E., Finkel, P., Strickmann, H.; Parf. u. Kosm. 59, 367 (1978)7; Parfümöle zur Überdeckung des Eigengeruchs; Riechstoffe mit eigener Repellentwirkung (z.B. Citronenöl, Lavendelöl, Zimtöl), Wasser und kosmetische Grundstoffe wie z.B. Isopropylmyristat, Paraffinöl, usw. /Schrader, K.; Grundlagen und Rezepturen der Kosmetika, Dr. Alfred Hüthig Verlag, Heidelberg 19797.

Die erfindungsgemäßen Formulierungen werden wie die bekannten Formulierungen (Lotion/Spray) in verbrauchergerechter Menge auf frei getragene Hautstellen aufgetragen.

Die Herstellung bzw. Abfüllung der erfindungsgemäßen Lotionen und Aerosole erfogt wie in Nowak, G.A.;

Le A 21 730

- 5 -

Die kosmetischen Präparate, Verlag für chem. Industrie
H. Ziolkowsky KG, Augsburg 1975, beschrieben.

Le A 21 730

- 6 -

Die nachstehenden Beispiele geben einige typische Rezepturen:

| 1. | BAAPE | 3 Teile |
| | Ricinusöl | 5 Teile |
| | Isopropanol | 92 Teile |

| 2. | BAAPE | 40 Teile |
| | Ricinusöl | 35 Teile |
| | Isopropanol | 25 Teile |

| 3. | BAAPE | 20 Teile |
| | Ricinusöl | 15 Teile |
| | Isopropanol | 65 Teile |

| 4. | BAAPE | 12 Teile |
| | Ricinusöl | 8 Teile |
| | Ethanol | 70 Teile |
| | Wasser | 10 Teile |

| 5. | BAAPE | 15 Teile |
| | Ricinusöl | 10 Teile |
| | Isopropanol | 55 Teile |
| | Ethanol | 19 Teile |
| | Parfümöl | 1 Teil |

| 6. | BAAPE | 15 Teile |
| | Ricinusöl | 20 Teile |
| | Wasser | 5 Teile |
| | Isopropylmyristat | 2 Teile |
| | Isopropanol | 57 Teile |
| | Lavendelöl | 1 Teil |

Le A 21 730

| 7. | BAAPE | 18 Teile |
| | Ricinusöl | 12 Teile |
| | Dimethylphthalat | 4 Teile |
| | Ethanol | 65 Teile |
| | Parfümöl | 1 Teil |

| 8. | BAAPE | 15 Teile |
| | Ricinusöl | 15 Teile |
| | Ethylhexandiol | 5 Teile |
| | Isopropanol | 57 Teile |
| | Wasser | 5 Teile |
| | Propylenglykol | 2 Teile |
| | Parfümöl | 1 Teil |

| 9. | BAAPE | 10 Teile |
| | Ricinusöl | 14 Teile |
| | Paraffinöl | 3 Teile |
| | Isopropanol | 72 Teile |
| | Parfümöl | 1 Teil |

| 10. | BAAPE | 10 Teile |
| | Ricinusöl | 10 Teile |
| | Propylenglykol | 20 Teile |
| | Isopropanol | 59 Teile |
| | Parfümöl | 1 Teil |

| 11. | BAAPE | 12 Teile |
| | Ricinusöl | 15 Teile |
| | Glycerin | 8 Teile |
| | Isopropylmyristat | 3 Teile |
| | Isopropanol | 62 Teile |

Le A 21 730

## Patentansprüche

1.  Insektenvertreibungsmittel, enthaltend 3-(N-n-Butyl-N-acetyl)-aminopropionsäureethylester (BAAPE) auf der Basis alkoholischer Lösungen, dadurch gekennzeichnet, daß sie zusätzlich Ricinusöl enthalten.

2.  Insektenvertreibungsmittel nach Anspruch 1, dadurch gekennzeichnet, daß sie 3 - 40 %, vorzugsweise 5 - 25 %, besonders bevorzugt 10 - 20 % BAAPE enthalten.

3.  Insektenvertreibungsmittel nach Anspruch 1, dadurch gekennzeichnet, daß sie 5 - 35 %, vorzugsweise 10 - 20 % Ricinusöl enthalten.

4.  Insektenvertreibungsmittel nach Anspruch 1, dadurch gekennzeichnet, daß sie weitere Repellentien enthalten.

5.  Insektenvertreibungsmittel nach Anspruch 1, dadurch gekennzeichnet, daß sie Parfümöl und/oder Riechstoffe enthalten.

6.  Insektenvertreibungsmittel nach Anspruch 1, dadurch gekennzeichnet, daß sie Wasser enthalten.

Le A 21 730

0097812

1/1

FIG.1

FIG.2

Europäisches
Patentamt

**0097812**
Nummer der Anmeldung

**EUROPÄISCHER RECHERCHENBERICHT**

EP 83 10 5093

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 825 555  (T.A. LAJINESS) <br> * Spalte 5, Zeilen 56-63 * | 1-6 | A 01 N 37/46 |
| Y | US-A-3 501 572  (M.F. HANDLEY) <br> * Anspruch 1;  Spalte 3, Zeilen 8-60 * | 1-6 | |
| X | CA-A- 865 069  (D.W. SHAW) <br> * Anspruch 1;  Seite 2, Zeilen 7-10 * | 1-6 | |
| A,D | DE-A-2 246 433  (BEIERSDORF AG) <br> * Seite 3, letzter Absatz - Seite 4, Absatz 1; Seite 13, Beispiel 1 * | 1 | |
| A | CHEMICAL ABSTRACTS, Band 75, Nr. 9, 30. August 1971, Seite 355, Nr. 62522d, Columbus, Ohio, USA M.D.  ANWARULLAH  et  al.: "Distillation  fraction of castor seed oil as a repellent against mosquitoes"  &  SCI.  IND. (KARACHI) 1970, 7(3), 137-40 | 1 | **RECHERCHIERTE SACHGEBIETE (Int. Cl. ³)** <br><br> A 01 N |

Der vorliegende Recherchenbericht wurde für alle Patentansprüche erstellt.

| Recherchenort <br> DEN HAAG | Abschlußdatum der Recherche <br> 15-09-1983 | Prüfer <br> DECORTE D. |
|---|---|---|